(19) **Europäisches Patentamt / European Patent Office / Office européen des brevets**

(11) **EP 3 185 574 A1**

(12) # EUROPEAN PATENT APPLICATION
published in accordance with Art. 153(4) EPC

(43) Date of publication:
**28.06.2017 Bulletin 2017/26**

(21) Application number: **14900154.7**

(22) Date of filing: **15.12.2014**

(51) Int Cl.:
***H04N 21/442*** *(2011.01)*

(86) International application number:
**PCT/CN2014/093795**

(87) International publication number:
**WO 2016/026245 (25.02.2016 Gazette 2016/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.08.2014 CN 201410409641**

(71) Applicant: **SHENZHEN TCL NEW TECHNOLOGY CO., LTD**
**Nanshan District**
**Shenzhen,**
**Guangdong 518052 (CN)**

(72) Inventor: **WANG, Yunhua**
**Shenzhen**
**Guangdong 518052 (CN)**

(74) Representative: **Kuhnen & Wacker**
**Patent- und Rechtsanwaltsbüro**
**Prinz-Ludwig-Straße 40A**
**85354 Freising (DE)**

(54) ## METHOD AND SYSTEM FOR SWITCHING VIDEO PLAYBACK RESOLUTION

(57) The present invention discloses a method for switching video playback resolution, including: obtaining a strength of a current network signal as well as a frame rate of a currently-played video; based on the strength of the current network signal, switchable resolutions of the video, and the frame rate of the video, calculating switching time intervals of the switchable resolutions; based the strength of the current network signal, switching the resolution of the video by selecting an optimal switching time interval and the corresponding switchable resolution, and storing the optimal switching time interval and the corresponding switchable resolution in a time interval table which carries the strength of the corresponding network signal at each calculation of the switching time intervals. The present invention further discloses a system for switching video playback resolution and a television having the same. The present invention allows a smart television to switch the video resolution automatically according to the current network speed without manual operation from users, which saves time for the user.

FIG. 1

EP 3 185 574 A1

**Description**

**FIELD OF THE INVENTION**

The present invention relates to videos, and particularly, to a method and a system for switching video playback resolution.

**BACKGROUND OF THE INVENTION**

With the development of the technology of smart television, "high-definition", "networklization", and "intelligentize" video terminals, such as smart televisions become very common. The smart television has functions such as human-computer interaction, network searching, IP television, and video on demand (VOD), which brings enriched TV life to people.

With the continuous increasing of market competition, consumers pay more and more attention to watching effect with high quality. Besides, convenient operation and saving of operation time become important information when people select a television. However, when the current smart television is playing a network video, the resolution of the video can only be switched by manual operation. Supposed that a user plays a video A at a constant resolution, since the network speed is continuously changed, sometimes the playback of the video is smooth and sometimes is not. When the playback of the video is not smooth, it requires the user to switch the resolution of the video to a lower one such that the video can be smoothly played. When the network speed is relatively high, the user may want to switch the resolution to a higher one to obtain better watching effect. It is troublesome for the user to keep switching the resolution.

For example, the user opens the television at 7 o'clock pm, and selects the software Video Storm to play a 4k ultra high-definition video source. By 8 o'clock pm, the video has been played for a while. At this time, since most people has reached home after work, the network is at the peek using duration, making the network bandwidth become narrow and the playback of the video may become not smooth. At this time, only a half of the video has been played and the user needs to switch the resolution of the video to a lower one to continuously watch the video. However, the operation to switch the resolution is random. Generally, the user may switch the 4k ultra high definition mode to the super definition (1080p) mode and wait for the playback progress of the current video; if the buffering speed of the video is still low, the user may switch the high definition mode to the high definition mode (720p) and waits for the playback progress of the current video; if the buffering speed is still low, the user may switch the high definition mode (720p) to the standard definition mode (480p) and waits for the playback progress of the current video. Undoubtedly, since the user doesn't know the actual network speed, the user may switch the playback mode randomly many times and thus wastes much time.

**SUMMARY OF THE INVENTION**

The main purpose of the present invention is to overcome the technical problem that the smart television cannot automatically switch the resolution according to network speed to save operation time for users.

An embodiment of the present invention provides a method for switching video playback resolution, including:

step S1, obtaining a strength of a current network signal as well as a frame rate of a currently-played video;
step S2, based on the strength of the current network signal, switchable resolutions of the video, and the frame rate of the video, calculating switching time intervals of the switchable resolutions; and
step S3, based on the strength of the current network signal, switching the resolution of the video by selecting an optimal switching time interval and the switchable resolution corresponding to the optimal switching time interval, and storing the optimal switching time interval and the corresponding switchable resolution in a time interval table which carries the strength of the network signal at each calculation of the switching time intervals.

Preferably, before step S1, the method further includes:

step S0, switching the current resolution of the video to a minimum resolution of the video and playing the video at the minimum resolution when detecting that the number of video data packet in a video cache region is less than a first threshold value.

Preferably, when the time interval table carries data of a previous calculation of the switching time interval, the data includes a strength of a network signal corresponding to the previous calculation of the switching time interval, and step S3 includes:

step S31, comparing the strength of the current network signal with the strength of the network signal corresponding to the previous calculation of the switching time interval, if the strength of the current network signal is predetermined times greater than the strength of the network signal corresponding to the previous calculation of the switching time interval, turning to step S32, otherwise to step S33;

step S32, selecting the next higher resolution of the switchable resolution corresponding to the previous calculation of the switching time interval as the current video playback resolution; and

step S33, selecting the switchable resolution corresponding to the previous calculation of the switching time interval as the current video playback resolution.

Preferably, when the time interval table does not contain data of a previous calculation of the switching time interval, step S3 includes:

switching the resolution of the video by selecting a minimum switching time interval and the corresponding switchable resolution, and storing the minimum switching time interval and the corresponding switchable resolution in the time interval table.

Preferably, in step S2, the switching time intervals of the switchable resolutions are calculated according to the following formula:

$$H = (P*F)/(K*128*1024);$$

wherein H is the switching time interval, P is the switchable resolution, F is the frame rate, and K is the strength of the current network signal.

Preferably, before step S1, the method further includes:

step A1, obtaining a physical resolution of a screen; and

step A2, selecting the resolution in the switchable resolutions less than or equal to the physical resolution, selecting the resolution as the switchable resolution, turning to step S1 to calculate the switching time interval of the selected resolution.

Preferably, obtaining a physical resolution of a screen includes:

step A101, detecting the number of three primary colors of the screen of a television in a horizontal direction and in a vertical direction respectively;

step A102, calculating a resolution X of the screen in the horizontal direction according to the detected number of the three primary colors of the screen in the horizontal direction, calculating a resolution Y of the screen in the vertical direction according to the detected number of the three primary colors of the screen in the vertical direction, and the physical resolution of the screen being X*Y.

Preferably, before step S1, the method further includes:

step B1, detecting a playback duration of the video; and

step B2, when the playback duration of the video is less than a second predetermined threshold value, keeping playing the video at the current resolution.

An embodiment of the present invention provides a system for switching video playback resolution, including:

a first obtaining module, configured for obtaining a strength of a current network signal as well as a frame rate of a currently-played video;

a calculation module, configured for, based on the strength of the current network signal, switchable resolutions of the video, and a frame rate of the video, calculating switching time intervals of the switchable resolutions; and

a first switching module, configured for switching the resolution of the video by selecting an optimal switching time interval and the corresponding switchable resolution, and storing the optimal switching time interval and the corresponding switchable resolution in a time interval table which carries the strength of the network signal at each calculation of the switching time intervals.

Preferably, the system further includes:

a second switching module, configured for, when it is detected that the number of video data packet in a video cache region is less than a first threshold value, switching the resolution of the video to a minimum resolution of the video and playing the video at the minimum resolution.

Preferably, when the time interval table carries data at a previous calculation of the switching time interval, the data includes a strength of a network signal at the previous calculation of the switching time interval; and the first switching module includes:

a comparison unit, configured for comparing the strength of the current network signal with the strength of the network signal at the previous calculation of the switching time interval, and calling a first selecting unit if the strength of the current network signal is predetermined times greater than the strength of the network signal at the previous calculation of the switching time interval, otherwise calling a second selecting unit;
the first selecting unit, configured for selecting the next higher resolution of the one at the previous calculation of the switching time interval as the current resolution of the video; and
the second selecting unit, configured for selecting the switchable resolution corresponding to the previous calculation of the switching time interval as the current resolution of the video.

Preferably, when the time interval table does not contain data at a previous calculation of the switching time interval, the first switching module is configured for switching the resolution of the video by selecting a minimum switching time interval and the corresponding switchable resolution, and storing the minimum switching time interval and the corresponding switchable resolution in the time interval table.
Preferably, the calculation module calculates the switching time intervals of the switchable resolutions according to the following formula:

$$H = (P*F)/(K*128*1024)$$ ;

wherein H is the switching time interval, P is the switchable resolution, F is the frame rate, and K is the strength of the current network signal.
Preferably, the system further includes:

a second obtaining module, configured for obtaining a physical resolution of a screen; and
a selecting module, configured for selecting the resolution in the switchable resolutions less than or equal to the physical resolution, selecting the resolution as the switchable resolution, turning to step S1 to calculate the switching time interval of the selected resolution.

Preferably, the second obtaining module includes:

a physical detecting unit, configured for respectively detecting the number of three primary colors of a screen in a horizontal direction and in a vertical direction; and
a calculation unit, configured for calculating a resolution X of the screen in the horizontal direction according to the detected number of the three primary colors of the screen in the horizontal direction, calculating a resolution Y of the screen in the vertical direction according to the detected number of the three primary colors of the screen in the vertical direction, and the physical resolution of the screen being X*Y.

Preferably, the system further includes:

a video detecting module configured for detecting a playback duration of the video; and
a playing module configured for, when the playback duration of the video is less than a second predetermined threshold value, keeping playing the video at the current resolution.

An embodiment of the present invention further provides a television, including a system for switching video playback resolution, wherein the system includes:

a first obtaining module, configured for obtaining a strength of a current network signal as well as a currently-played video;
a calculation module, configured for, based on the strength of the current network signal, switchable resolutions of the video, and a frame rate of the video, calculating switching time intervals of the switchable resolutions; and a first switching module, configured for switching the resolution of the video by selecting an optimal switching time interval and the corresponding switchable resolution, and storing the optimal switching time interval and the corresponding switchable resolution in a time interval table which carries the strength of the network signal at each calculation of the switching time intervals.

The present disclosure calculates the switching time intervals of the switchable resolutions of the video by obtaining the strength of the network signal and the frame rate of the currently-played video, and performs the switching operation by selecting the optimal switching time interval and the corresponding switchable resolution, which allows the smart television to switch the resolution automatically according to the network speed without manual operation and thus saves the operation for the user.

**BRIEF DESCRIPTION OF THE DRAWINGS**

FIG. 1 is a flow chart of a method for switching video playback resolution according to a first embodiment of the present disclosure;
FIG. 2 is a detailed flow chart of the method for switching video playback resolution of FIG. 1;
FIG. 3 is a flow chart of a method for switching video playback resolution according to a second embodiment of the present disclosure;
FIG. 4 is a flow chart of a method for switching video playback resolution according to a third embodiment of the present disclosure;
FIG. 5 is a detailed flow chart of the method for switching video playback resolution of FIG. 4;
FIG. 6 is a flow chart of a method for switching video playback resolution according to a fourth embodiment of the present disclosure;
FIG. 7 is a schematic view of a system for switching video playback resolution according to a first embodiment of the present disclosure;
FIG. 8 is a schematic view of a first switching module according to an embodiment of the present disclosure;
FIG. 9 is a schematic view of a system for switching video playback resolution according to a second embodiment of the present disclosure;
FIG. 10 is a schematic view of a system for switching video playback resolution according to a third embodiment of the present disclosure; and
FIG. 11 is a schematic view of a second obtaining module according to an embodiment of the present disclosure.

The realization of the object, features, and advantages of the present disclosure are given in further detail in combination with the embodiments with reference to the accompanying drawings.

**DETAILED DESCRIPTION OF THE EMBODIMENT**

The technical solution of the present invention is hereinafter described in detail with reference to the accompanying drawings. It is evident that the embodiments are only some exemplary embodiments of the present invention, and the present invention is not limited to such embodiments. Other embodiments that those skilled in the art obtain based on embodiments of the present invention also all within the protection scope of the present invention.

The present disclosure provides a method for switching video playback resolution.

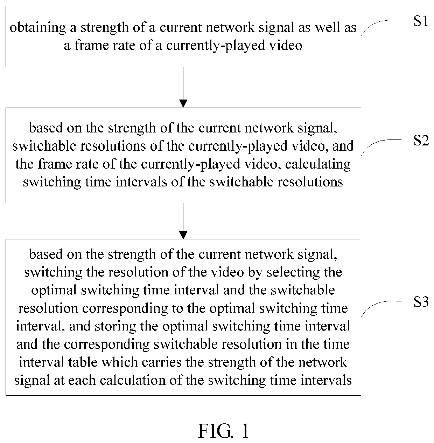

Referring to FIG. 1, which is a flow chart of the method for switching video playback resolution according to a first embodiment of the present disclosure, the method includes steps as follows.

Step S1, obtaining a strength of a current network signal as well as a frame rate of a currently-played video.

In some embodiments, the strength of the current network signal and the frame rate of the currently-played video may be obtained in real time. Alternatively, the strength of the current network signal and the frame rate of the currently-played video may be obtained when it is detected that the number of video data packet in a video cache region is less than a first predetermined threshold value. For example, after opening a video play terminal, the user plays the video A at a relatively higher resolution. The video play terminal may be a television, a computer or any other smart device. In the embodiment, the video play terminal is a smart television. The television obtains the video data packet of the video A from network and caches the video packet into a video cache region to be read and played. It is understood that the higher the network speed input to the television, the higher the transmission speed of the video data packet. That is, when the network speed is higher, the number of the video data packet cached into the preset video cache region is greater; when the network speed is lower, the number of the video data packet cached into the preset video cache region is less. Moreover, when the number of the video data packet cached into the preset video cache region is greater, the television can play the video at a higher resolution to acquire better watching effect; when the number of the video data packet cached into the preset video cache region is relatively small or there is no video data packet in the preset video cache region, the television cannot play the video smoothly or may display that the video is being cached, preventing the user from watching the video normally. Therefore, if the user wants to continuously watch the video smoothly, the current network speed needs to be detected and the resolution needs to be adjusted according to the current network speed.

In the embodiment, the television is provided with an element for detecting network signal or an application for detecting network speed. The strength of the current network signal input to the television is obtained by the element for detecting network signal or the application for detecting network speed. Optionally, the frame rate of the current television video is 60 Hz.

Step S2, based on the strength of the current network signal, switchable resolutions of the currently-played video, and the frame rate of the currently-played video, calculating switching time intervals of the switchable resolutions.

The switching time intervals of the switchable resolutions in step S2 are calculated according to the following formula: $H = (P*F)/(K * 128 * 1024)$, wherein H is the switching time interval measured in seconds, F is the frame rate of the video, K is the strength of the network signal input to the television measured in Hz, and P is the resolution to which the video can be switched, for example, the resolution of the video can be switched to any one of the following resolutions: 4k, 1080p, 720p, and 480p.

The wait time required for switching the current resolution to each one of other switchable resolutions is calculated according to the current network bandwidth and each switchable resolution of the currently-played video. Therefore, according to the wait time, the television can be set to play the video at the corresponding resolution by automatically switching the current resolution to the corresponding resolution after the wait time has elapsed or automatically switching the current resolution to the optimal resolution according to the current network speed. Detailed embodiment is given in the following description to show how to calculate the switching time interval.

For example, the video currently played by the television is A, the frame rate of the video is 60 Hz, the video is played at the lowest resolution, and the current network speed is 8 megabytes, that is, the network bandwidth is 8 megabytes. Supposed that the resolutions of the video A include 4k, 1080p, 720p, and 480p, since the video is played at the lowest 480p resolution, based on the current network speed of 8 megabytes, for the smooth playback of the video, the wait time H required for respectively switching the current resolution to resolutions of 4k, 1080p, and 720p are calculated. The process for calculating the wait time H and the result of the calculation is shown in Table 1.

**Table 1**

| Name of video | Switchable resolution of the video | | Frame Rate (Hz) | Unit pixel per second | Network bandwidth K (in megabytes) | Switching time (in seconds) |
|---|---|---|---|---|---|---|
| A | 4k (ultra high definition) | 3840*2160 | 60 | 497664000 | 8 | 474 |
| | 1080p (super definition) | 1920*1080 | 60 | 124416000 | 8 | 118 |
| | 720p (high definition) | 1280*720 | 60 | 55296000 | 8 | 52 |
| | 480p (standard definition) | 640*480 | 60 | 18432000 | 8 | 17 |

Since the television plays the video A at 480p resolution, from Table 1, it requires 52 seconds for switching the current resolution to 720p (high definition) resolution, 118 seconds for switching the current resolution to 1080p (super definition) resolution, and 474 seconds for switching the current resolution to 4k (ultra high definition) resolution.

Step S3, based on the strength of the current network signal, switching the resolution of the video by selecting the optimal switching time interval and the switchable resolution corresponding to the optimal switching time interval, and storing the optimal switching time interval and the corresponding switchable resolution in the time interval table which carries the strength of the network signal at each calculation of the switching time intervals.

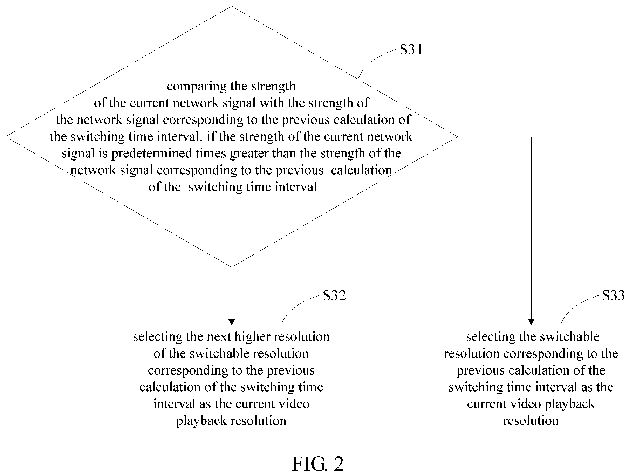

When the time interval table further carries the data of the previous calculation of the switching time interval, the data may include the strength of the network signal corresponding to the previous calculation of the switching time interval. Referring to FIG. 2, which is a detailed flow chart of the method shown in FIG. 1, step S3 includes:

step S31, comparing the strength of the current network signal with the strength of the network signal corresponding to the previous calculation of the switching time interval, if the strength of the current network signal is predetermined times greater than the strength of the network signal corresponding to the previous calculation of the switching time interval, turning to step S32, otherwise to step S33;

step S32, selecting the next higher resolution of the switchable resolution corresponding to the previous calculation of the switching time interval as the current video playback resolution; and

step S33, selecting the switchable resolution corresponding to the previous calculation of the switching time interval as the current video playback resolution.

In the embodiment, if the strength of the current network signal is more than twice the strength of the network signal corresponding to the previous calculation of the switching time interval, selecting the next higher resolution of the one previously selected and switching to play the video at the higher resolution after the time interval has elapsed. If the strength of the current network signal is less than twice the strength of the network signal corresponding to the previous calculation of the switching time interval, keeping playing the video at the previously-selected resolution. The predetermined times in step S31 can be determined according to the relationship between the strength of the network signal and the resolution, for example, when the network speed is 2 megabytes, the resolution allowing the video to play smoothly is 780p, and when the network speed is 3 megabytes, the resolution allowing the video to play smoothly is 1080p, then the switching operation can be triggered when the predetermined times are greater than or equal to 1.5. Moreover, during the switching operation, the next higher resolution is selected. For example, the switchable resolutions of the video A are 4k, 1080p, 720p, and 480p. Supposed that in the last switching operation, the resolution is 780p and the network speed is 2 megabytes, and the current network speed is 8 megabytes, that is, the strength of the current network signal is 4 times greater than the strength of the network signal corresponding to the previous calculation of the switching time interval. If the standard for triggering the switching operation is that the strength of the current network signal is 1.5 times the strength of the network signal corresponding to the previous calculation of the switching time interval, then the current resolution is switched to the next higher one being 1080p. It is noted that the standard for the switching operation is not limited to this embodiment, in other embodiments, there may be more than one standard for the switching operation. For example, there can be two standards for the switching operation, when the strength of the current network signal is greater than 1.5 times the strength of the network signal at the previous calculation of the switching time interval, switching the current resolution to the next higher one; when the strength of the current network signal is greater than twice the strength of the network signal at the previous calculation of the switching time interval, switching the current resolution to the two-level higher one, for example, if the current resolution is 480p, switching the resolution to 1080p rather than to 780p. It is noted that the predetermined times are not limited to this embodiment, in other embodiment, the predetermined times are set according to actual situations.

When the data of the previous calculation of the switching time interval is not stored in the time interval table, the step S3 includes: switching the resolution by selecting the minimum switching time interval and the corresponding switchable resolution, and storing the minimum switching time interval and the corresponding switchable resolution in the time interval table, which guarantees that the video can be played smoothly under the current network speed.

It is noted that since the network speed is relatively stable in a period, thus, in other embodiments, the minimum time interval can be the optimal solution for switching the resolution by using sorting method to guarantee that the television can continuously smoothly play the video A. In addition, after waiting for a predetermined time interval, the television can switch to the resolution corresponding to the current network speed automatically, which ensures that the user cannot feel the switching process. Therefore, the user does not need to switch the resolution of the video manually, which not only facilitates the user to operate the television, but also saves waiting time for the user.

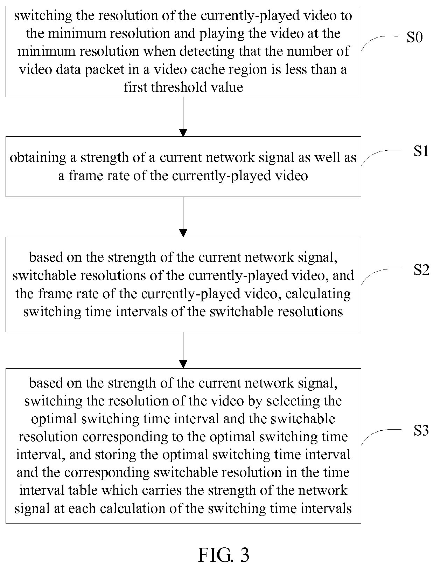

Based on the above embodiment, referring to FIG. 3, which is a flow chart of a method for switching video playback resolution according to a second embodiment, the method of the second embodiment further includes the following step before step S 1:

step S0, switching the resolution of the currently-played video to the minimum resolution and playing the video at the minimum resolution when detecting that the number of video data packet in a video cache region is less than a first threshold value.

When the number of the stored video data packet is relatively small or there is no video data packet in the preset video cache region in a while, the television cannot play the video smoothly or may display that the video is being cached. Thus, in order to ensure that the video can be smoothly played, a threshold value, such as 20 can be set. When the number of the video data packet is less than 20, the television is triggered to switch to play the video at a lower resolution. The video can be played smoothly to the maximum extent by automatically switching the current resolution to the minimum resolution. For example, supposed that the current video can be played at four resolutions of 4k, 1080p, 720p, and 480p, when the user chooses to play the video at the minimum resolution, switching to play the video at 480p resolution. In this way, the dismatchment between the resolution and the network speed can be avoided and thus the continuous switch of the resolution can be prevented to allow the user to watch the video smoothly. It is noted that in step S0, the premise to read the video data pre-stored in the video cache region is that the video is being played. If the video is being paused or fast forwarded, only the command of pausing or fast forwarding the video is executed.

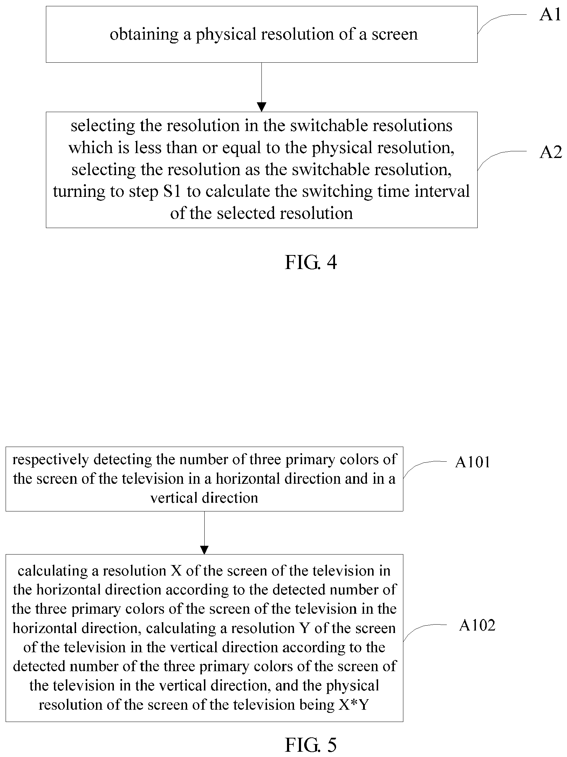

Referring to FIG. 4, which is a flow chart of a method for switching video playback resolution according to a third embodiment of the present disclosure, based on the above embodiment, the method of this embodiment further includes the following steps before step S 1.

Step A1, obtaining a physical resolution of a screen.

The physical resolution of the screen of the television can be pre-stored in a memory of the television and can be read out when needed. When the physical resolution of the screen of the television is not stored in the memory of the television, the physical resolution can be obtained by the following method. Referring to FIG. 5, which is a detailed flow chart of the method for switching video playback resolution shown in FIG. 4, step A1 includes:

step A101, respectively detecting the number of three primary colors of the screen of the television in a horizontal direction and in a vertical direction; and
step A102, calculating a resolution X of the screen of the television in the horizontal direction according to the detected number of the three primary colors of the screen of the television in the horizontal direction, calculating a resolution Y of the screen of the television in the vertical direction according to the detected number of the three primary colors of the screen of the television in the vertical direction, and the physical resolution of the screen of the television being X*Y.

Since each pixel is formed by the primary colors of red, green, and blue, thus, the number of the primary colors is three times the number of the pixels. That is, when the resolution of the screen is 1920*1080, the number of the three primary colors in the horizontal direction should be 1920*3=5760, and the number of the three primary colors in the vertical direction should be 1080*3=3240. The resolution 1920 in the horizontal direction is obtained by dividing 5760 by 3, and the resolution 1080 in the vertical direction is obtained by dividing 3240 by 3, thus, the resolution of the whole screen is 1920*1080, which should not be exceeded when switching the resolution of the screen.

Step A2, selecting the resolution in the switchable resolutions which is less than or equal to the physical resolution, selecting the resolution as the switchable resolution, turning to step S1 to calculate the switching time interval of the selected switchable resolution.

The resolution of the screen is read to determine the definition (namely, the resolution) which the video can be switched to. If the switchable resolution of the video exceeds the physical resolution of the screen, it is unnecessary to calculate the wait time for switching to the resolution which is greater than the physical resolution. For example, the physical resolution of the screen is 1920*1080, and the resolution which the video can be switched to is 3840*2160, which obviously exceeds the physical resolution of the screen, at this time, it is unnecessary to calculate the wait time for switching the current resolution to the resolution of 3840*2160 and only the wait time for switching the current resolution to the one less than 3840*2160 needs to be calculated. This is because switching the resolution of the video to the one greater than 1920*1080 cannot enable the image of the video to be clearer and also wastes the network flow. It is noted that the video will be played at the minimum switchable resolution if all the switchable resolutions of the video are greater than the physical resolution of the playing device.

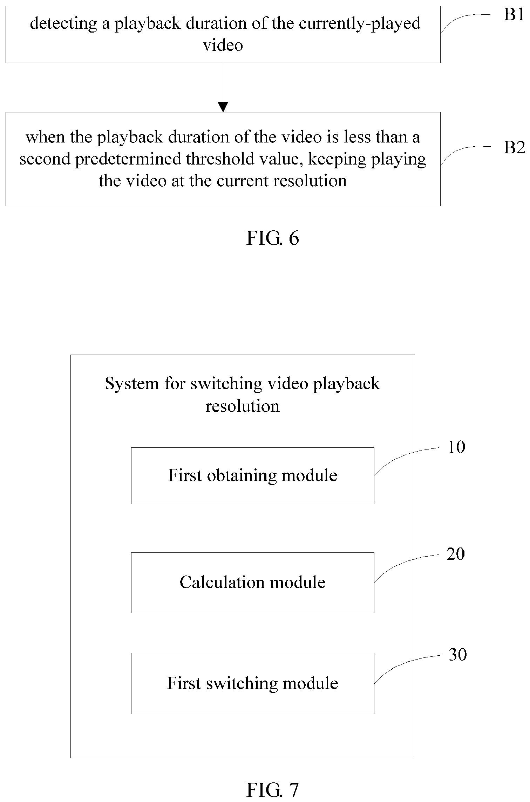

Furthermore, referring to FIG. 6, which is a flow chart of a method for switching video playback resolution according to a fourth embodiment of the present disclosure, based on the above embodiment, the method of the embodiment further includes the following steps before step S1, S0, or A1 to save background operations:

step B1, detecting a playback duration of the currently-played video;
step B2, when the playback duration of the video is less than a second predetermined threshold value, keeping playing the video at the current resolution.

The length of the video, namely the playback duration of the video in time, is obtained by calculating the frame rate in each second and the number of the total frames and dividing the number of the total frames by the frame rate in each second. The time duration of the whole video packet based on 60 images per second is obtained by reading the size of the video packet and calculating the number of the total frames by each frame of image in the vide packet. For example, if 60 frames are read in one second, then the total number of frames is 18000, which indicates the system contains 300-second image; if 24 frames are read in one second, then the total number of frames is 240 and the system contains 10-secodn image. The longer the time required to read the frames, the longer the playback duration of the video; the shorter the time required to read the frames, the shorter the playback duration of the video. Short video sources are generally some mobile phone images or IPAD videos. Since the resolution of this type of device is limited, the resolution of the video played on this type of device is also relatively low, thus, in the method of this embodiment, the video is played at the minimum resolution by the television.

It is understood that since the playback duration of the currently-video is detected at first, and the background of the television does not need to switch the resolution automatically according to the strength of the network signal when the playback duration of the video is relatively short. Therefore, some unnecessary operations of the background can be saved.

The method of the present disclosure calculates the switching time intervals of the switchable resolutions of the video by obtaining the strength of the network signal and the frame rate of the currently-played video, and performs the switching operation by selecting the optimal switching time interval and the corresponding switchable resolution, which allows the smart television to switch the resolution automatically according to the network speed without manual operation and thus saves the operation for the user.

The present disclosure further provides a system for switching video playback resolution.

Referring to FIG. 7, which is a schematic view of a system for switching video playback resolution according to a first embodiment of the present disclosure, the system includes a first obtaining module 10, a calculation module 20, and a first switching module 30.

The first obtaining module 10 is configured for obtaining a strength of a current network signal as well as a frame rate of the currently-played video.

In some embodiments, the strength of the current network signal and the frame rate of the currently-played video may be obtained in real time. Alternatively, the strength of the current network signal and the frame rate of the currently-played video may be obtained when it is detected that the number of the video data packet in the video cache region is less than a first predetermined threshold value. For example, after opening a video play terminal, the user plays the video A at a relatively higher resolution. The video play terminal may be a television, a computer or any other smart device. In the embodiment, the video play terminal is a smart television. The television obtains the video data packet of the video A from network and caches the video data packet into a video cache region to be read and played. It is understood that the higher the network speed input to the television, the higher the transmission speed of the video data packet. That is, when the network speed is higher, the number of the video data packet cached into the preset video cache region is greater; when the network speed is lower, the number of the video data packet cached into the preset video cache region is less. Moreover, when the number of the video data packet cached into the preset video cache region is greater, the television can play the video at a higher resolution to acquire better watching effect; when the number of the video data packet cached into the preset video cache region is relatively small or there is no video data packet in the preset video cache region, the television cannot play the video smoothly or may display that the video is being cached, preventing the user from watching the video normally. Therefore, if the user wants to continuously watch the video smoothly, the current network speed needs to be detected and the resolution needs to be adjusted according to the current network speed.

In the embodiment, the television is provided with an element for detecting network signal or an application for detecting network speed. The strength of the current network signal input to the television is obtained by the element for detecting network signal or the application for detecting network speed. Optionally, the frame rate of the current television video is 60 Hz.

The calculation module 20 is configured for, based on the strength of the current network signal, switchable resolutions of the currently-played video, and the frame rate of the currently-played video, calculating switching time intervals of the switchable resolutions.

The calculation module 20 calculates the switching time intervals of the switchable resolutions according to the following formula: $H=(P*F)/(K*128*1024)$, wherein H is the switching time interval measured in seconds, F is the frame rate of the video, K is the strength of the network signal input to the television measured in Hz, and P is the resolution to which the video can be switched, for example, the resolution of the video can be switched to any one of the following resolutions: 4k, 1080p, 720p, and 480p.

The wait time required for switching the current resolution to each one of other switchable resolutions is calculated according to the current network bandwidth and each switchable resolution of the currently-played video. Therefore, according to the wait time, the television can be set to play the video at the corresponding resolution by automatically switching the current resolution to the corresponding resolution after the wait time or automatically switching the current resolution to the optimal resolution according to the current network speed. Detailed embodiment is given in the following description to show how to calculate the switching time interval.

For example, the video currently played by the television is A, the frame rate of the video is 60 Hz, the video is played at the lowest resolution, and the current network speed is 8 megabytes, that is, the network bandwidth is 8 megabytes. Supposed that the resolutions of the video A include 4k, 1080p, 720p, and 480p, since the video is played at the lowest resolution of 480p, based on the current network speed of 8 megabytes, for the smooth playback of the video, the wait times H required for respectively switching the current resolution to resolutions of 4k, 1080p, and 720p are calculated. The process for calculating the wait time H and the result of the calculation is shown in Table 1.

**Table 1**

| name of video | Switchable of the video resolution | | Frame Rate (Hz) | Unit pixel per second | Network bandwidth K (in megabytes ) | Switching time (in seconds) |
|---|---|---|---|---|---|---|
| A | 4k (ultra high definition) | 3840*2160 | 60 | 497664000 | 8 | 474 |
| | 1080p (super definition) | 1920*1080 | 60 | 124416000 | 8 | 118 |
| | 720p (high definition) | 1280*720 | 60 | 55296000 | 8 | 52 |
| | 480p (standard definition) | 640*480 | 60 | 18432000 | 8 | 17 |

Since the television plays the video A at 480p resolution, from Table 1, it requires 52 seconds for switching the current resolution to 720p (high definition) resolution, 118 seconds for switching the current resolution to 1080p (super definition) resolution, and 474 seconds for switching the current resolution to 4k (ultra high definition) resolution.

The first switching module 30 is configured for, based on the strength of the current network signal, switching the video by selecting the optimal switching time interval and the switchable resolution corresponding to the optimal switching time interval, and storing the optimal switching time interval and the corresponding switchable resolution in the time interval table. The time interval table carries the strength of the network signal at each calculation of the switching time intervals.

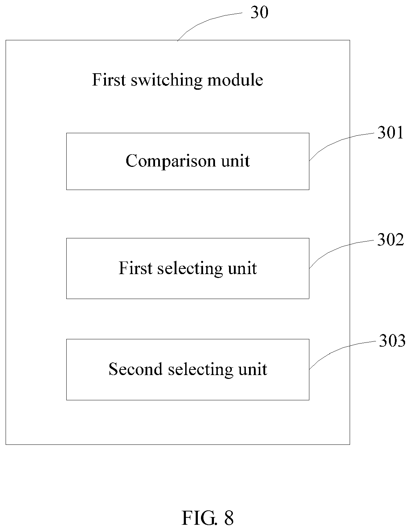

When the time interval table further carries the data of the previous calculation of the switching time interval, the data may include the strength of the network signal corresponding to the previous calculation of the switching time interval. Referring to FIG. 8, which is a schematic view of the first switching module shown in the first embodiment, the first switching module 30 includes a comparison unit 301, a first selecting unit 302, and a second selecting unit 303.

The comparison unit 301 is configured for comparing the strength of the current network signal with the strength of the network signal corresponding to the previous calculation of the switching time interval, and calling a first selecting unit 302 if the strength of the current network signal is predetermined times greater than the strength of the network signal corresponding to the previous calculation of the switching time interval, otherwise calling a second selecting unit 303.

The first selecting unit 302 is configured for selecting the next higher resolution of the switchable resolution corresponding to the previous calculation of the switching time interval as the current video playback resolution.

The second selecting unit 303 is configured for selecting the switchable resolution corresponding to the previous calculation of the switching time interval as the current video playback resolution.

In the embodiment, if the strength of the current network signal is more than twice the strength of the network signal corresponding to the previous calculation of the switching time interval, selecting the next higher resolution of the one previously selected and switching to play the video at the higher resolution after the time interval has elapsed. If the strength of the current network signal is less than twice the strength of the network signal corresponding to the previous calculation of the switching time interval, keeping playing the video at the previously-selected resolution. The predetermined times in step S31 can be determined according to the relationship between the strength of the network signal and the resolution, for example, when the network speed is 2 megabytes, the resolution allowing the video to play smoothly is 780P, and when the network speed is 3 megabytes, the resolution allowing the video to play smoothly is 1080p, then the switching operation can be triggered when the predetermined times are greater than or equal to 1.5. Moreover, during the switching operation, the next higher resolution is selected. For example, the switchable resolutions of the video A are 4k, 1080p, 720p, and 480p. Supposed that in the last switching operation, the resolution is 780p and the network speed is 2 megabytes, and the current network speed is 8 megabytes, that is, the strength of the current network signal is 4 times greater than the strength of the network signal corresponding to the previous calculation of the switching time interval. If the standard for triggering the switching operation is that the strength of the current network signal is 1.5 times the strength of the network signal corresponding to the previous calculation of the switching time interval, then the current resolution is switched to the next higher one being 1080p. It is noted that the standard for the switching operation is not limited to this embodiment, in other embodiments, there may be more than one standard for the switching operation. For example, there can be two standards for the switching operation, when the strength of the current network signal is greater than 1.5 times the strength of the network signal at the previous calculation of the switching time interval, switching the current resolution to the next higher one; when the strength of the current network signal is more than twice the strength of the network signal at the previous calculation of the switching time interval, switching the current resolution to the two-level higher one, for example, if the current resolution is 480p, switching the resolution to 1080p rather than to 780p.

When the data of the previous calculation of the switching time interval is not stored in the time interval table, the step S3 includes: switching the resolution by selecting the minimum switching time interval and the corresponding switchable resolution, and storing the minimum switching time interval and the corresponding switchable resolution in the time interval table, which guarantees that the video can be played smoothly under the current network speed.

It is noted that since the network speed is relatively stable in a period, thus, in other embodiments, the minimum time interval can be the optimal solution for switching the resolution by using sorting method to guarantee that the television can continuously smoothly play the video A. In addition, after waiting for a predetermined time interval, the television can switch to the resolution corresponding to the current network speed automatically, which ensures that the user cannot feel the switching process. Therefore, the user does not need to switch the resolution of the video manually, which not only facilitates the user to operate the television, but also saves waiting time for the user.

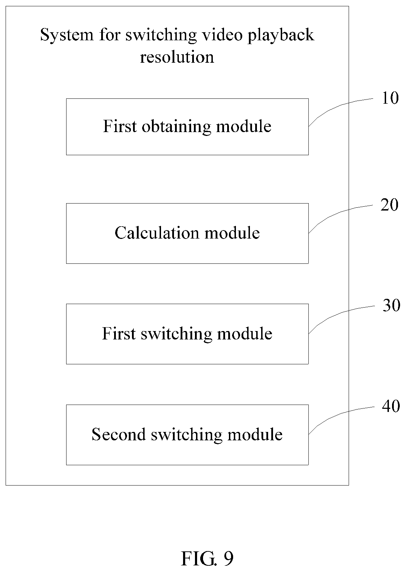

Referring to FIG. 9, which is a schematic view of a system for switching video playback resolution according to a second embodiment of the present disclosure, compared with the first embodiment, the system of the second embodiment further includes a second switching module 40 configured for switching the resolution of the currently-played video to the minimum resolution and playing the video at the minimum resolution when detecting that the number of video data packet in a video cache region is less than a first threshold value.

When the number of the stored video data packet is relatively small or there is no video data packet in the preset video cache region in a while, the television cannot play the video smoothly or may display that the video is being cached. Thus, in order to ensure that the video can be smoothly played, a threshold value, such as 20 can be set. When the number of the video data packet is less than 20, the television is triggered to switch to play the video at a lower resolution. The video can be played smoothly to the maximum extent by automatically switching the current resolution to the minimum resolution. For example, supposed that the current video can be played at four resolutions of 4k, 1080p, 720p, and 480p, when the user chooses to play the video at the minimum resolution, switching to play the video at 480p resolution. In this way, the dismatchment between the resolution and the network speed can be avoided and thus the continuous switch of the resolution can be prevented to allow the user to watch the video smoothly. It is noted that the premise to read the video data pre-stored in the video cache region is that the video is being played. If the video is being paused or fast forwarded, only the command of pausing or fast forwarding the video is executed.

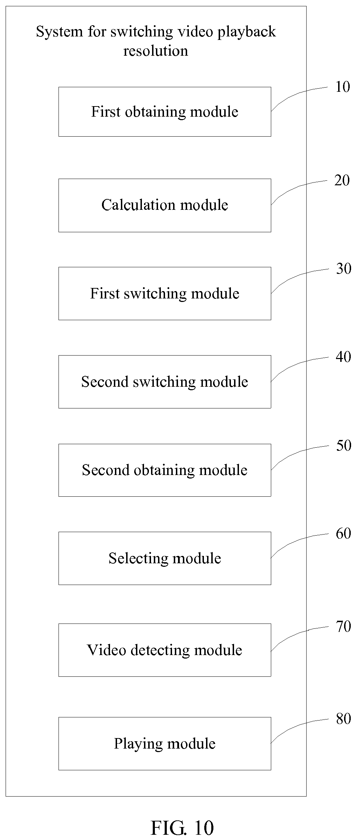

Referring to FIG. 10, which is a schematic view of a system for switching video playback resolution according to a third embodiment of the present disclosure, compared with the second embodiment, the system of the third embodiment further includes a second obtaining module 50 and a second selecting module 60.

The second obtaining module 50 is configured for obtaining a physical resolution of a screen.

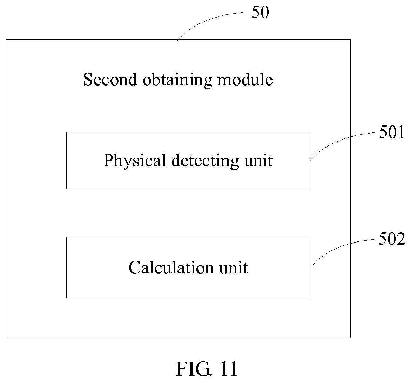

The physical resolution of the screen of the television can be pre-stored in a memory of the television and can be read out when needed. When the physical resolution of the screen of the television is not stored in the memory of the television, the physical resolution can be obtained by the following method. Referring to FIG. 11, which is a schematic view of the second obtaining module 50, the second obtaining module 50 includes:

a physical detecting unit 501 configured for respectively detecting the number of three primary colors of the screen of the television in a horizontal direction and in a vertical direction; and
a calculation unit configured for calculating a resolution X of the screen of the television in the horizontal direction according to the detected number of the three primary colors of the screen of the television in the horizontal direction, calculating a resolution Y of the screen of the television in the vertical direction according to the detected number of the three primary colors of the screen of the television in the vertical direction, wherein the physical resolution of the screen of the television is X*Y.

Since each pixel is formed by the three primary colors of red, green, and blue, thus, the number of the primary colors is three times the number of the pixels. That is, when the resolution of the screen is 1920*1080, the number of the three primary colors in the horizontal direction should be 1920*3=5760, and the number of the three primary colors in the vertical direction should be 1080*3=3240. The resolution 1920 in the horizontal direction is obtained by dividing 5760 by 3, and the resolution 1080 in the vertical direction is obtained by dividing 3240 by 3, thus, the resolution of the whole screen is 1920*1080, which should not be exceeded when switching the resolution of the screen.

The second selecting module 60 is configured for selecting the resolution in the switchable resolutions which is less than or equal to the physical resolution, selecting the resolution as the switchable resolution, turning to step S1 to calculate the switching time interval of the selected switchable resolution.

The resolution of the screen is read to determine the definition (namely, the resolution) which the video can be switched to. If the switchable resolution of the video exceeds the physical resolution of the screen, it is unnecessary to calculate the wait time for switching the current resolution to the resolution which is greater than the physical resolution. For example, the physical resolution of the screen is 1920*1080, and the resolution which the video can be switched to is 3840*2160, which obviously exceeds the physical resolution of the screen, at this time, it is unnecessary to calculate the wait time for switching the current resolution to the resolution of 3840*2160 and only the wait time for switching the current resolution to the one less than 3840*2160 needs to be calculated. This is because switching the resolution of the video to the one greater than 1920*1080 cannot enable the image of the video to be clearer and also wastes the network flow. It is noted that the video will be played at the minimum switchable resolution if all the switchable resolutions of the video are greater than the physical resolution of the playing device.

Furthermore, referring to FIG. 11, based on the above embodiment, the system of this embodiment further includes a video detecting module 70 and a playing module 80.

The video detecting module 70 is configured for detecting a playback duration of the currently-played video;

The playing module 80 is configured for, when the playback duration of the video is less than a second predetermined threshold value, keeping playing the video at the current resolution.

The length of the video, namely the playback duration of the video in time, is obtained by calculating the frame rate in each second and the number of the total frames and dividing the number of the total frames by the frame rate in each second. The time duration of the whole video packet based on 60 images per second is obtained by reading the size of the video packet and calculating the number of the total frames by each frame of image in the vide packet. For example, if 60 frames are read in one second, then the total number of frames is 18000, which indicates the system contains 300-second image; if 24 frames are read in one second, then the total number of frames is 240 and the system contains 10-secodn image. The longer the time required to read the frames, the longer the playback duration of the video; the shorter the time required to read the frames, the shorter the playback duration of the video. Short video sources are generally some mobile phone images or IPAD videos. Since the resolution of this type of device is limited, the resolution of the video played on this type of device is also relatively low, thus, in the method of this embodiment, the video is played at the minimum resolution by the television.

It is understood that since the playing time length of the currently-video is detected at first, and the background of the television does not need to switch the resolution automatically according to the strength of the network signal when the playing time of the video is relatively short. Therefore, some unnecessary operations of the background can be saved.

In the system for switching video playback resolution provided in the present disclosure, the first obtaining module 10 obtains the strength of the network signal and the frame rate of the currently-played video, the calculation module 20 calculates the switching time intervals of the switchable resolutions, the first switching module 30 switches the resolutions by selecting the optimal switching time interval and the corresponding switchable resolution, which allows the smart television to switch the resolution automatically according to the network speed without manual operation and thus saves the operation for the user.

Based on the above description of the examples, those skilled in the art would clearly understand that the examples may be implemented by software plus a necessary common hardware platform, of course, they may also be implemented by hardware. In many cases, the former is a preferred manner. Based on such understanding, the essential part of the technical solution of the present invention or the part contributed to the prior art can be in the form of a software product, and the computer software product is stored in a storage medium (such as ROM/RAM, disk or disc) and includes several codes to make a computer device (such as a handset, a personal computer, a server or a network device) perform the method in embodiments of the present invention.

The foregoing descriptions are only preferred embodiments of the present invention and are not intended to limit the present invention. Any modification, equivalent replacement and improvement made under the spirit and principle of the present invention should be included in the protection scope thereof.

**Claims**

1. A method for switching video playback resolution, comprising:

   step S1, obtaining a strength of a current network signal as well as a frame rate of a currently-played video;
   step S2, based on the strength of the current network signal, switchable resolutions of the video, and the frame rate of the video, calculating switching time intervals of the switchable resolutions; and
   step S3, based on the strength of the current network signal, switching the resolution of the video by selecting an optimal switching time interval and the switchable resolution corresponding to the optimal switching time interval, and storing the optimal switching time interval and the corresponding switchable resolution in a time interval table which carries the strength of the network signal at each calculation of the switching time intervals.

2. The method according to claim 1, wherein before step S1, the method further comprises:

   step S0, switching the current resolution of the video to a minimum resolution of the video and playing the video at the minimum resolution when detecting that the number of video data packet in a video cache region is less than a first threshold value.

3. The method according to claim 1, wherein when the time interval table carries data of a previous calculation of the switching time interval, the data comprises a strength of a network signal corresponding to the previous calculation of the switching time interval, and step S3 comprises:

   step S31, comparing the strength of the current network signal with the strength of the network signal corresponding to the previous calculation of the switching time interval, if the strength of the current network signal is predetermined times greater than the strength of the network signal corresponding to the previous calculation of the switching time interval, turning to step S32, otherwise to step S33;
   step S32, selecting the next higher resolution of the switchable resolution corresponding to the previous calculation of the switching time interval as the current video playback resolution; and
   step S33, selecting the switchable resolution corresponding to the previous calculation of the switching time interval as the current video playback resolution.

4. The method according to claim 1, when the time interval table does not contain data of a previous calculation of the switching time interval, step S3 comprises:

   switching the resolution of the video by selecting a minimum switching time interval and the corresponding switchable resolution, and storing the minimum switching time interval and the corresponding switchable resolution in the time interval table.

5. The method according to claim 1, wherein in step S2, the switching time intervals of the switchable resolutions are calculated according to the following formula:

$$H = (P*F)/(K*128*1024);$$

   wherein H is the switching time interval, P is the switchable resolution, F is the frame rate, and K is the strength of the current network signal.

6. The method according to claim 1, wherein before step S1, the method further comprises:

   step A1, obtaining a physical resolution of a screen; and
   step A2, selecting the resolution in the switchable resolutions less than or equal to the physical resolution, selecting the resolution as the switchable resolution, turning to step S 1 to calculate the switching time interval of the selected resolution.

7. The method according to claim 5, wherein obtaining a physical resolution of a screen comprises:

   step A101, detecting the number of three primary colors of the screen of a television in a horizontal direction and in a vertical direction respectively;
   step A102, calculating a resolution X of the screen in the horizontal direction according to the detected number of the three primary colors of the screen in the horizontal direction, calculating a resolution Y of the screen in the vertical direction according to the detected number of the three primary colors of the screen in the vertical direction, and the physical resolution of the screen being X*Y.

8. The method according to claim 1, wherein before step S1, the method further comprises:

   step B1, detecting a playback duration of the video; and
   step B2, when the playback duration of the video is less than a second predetermined threshold value, keeping playing the video at the current resolution.

9.  A system for switching video playback resolution, comprising:

    a first obtaining module, configured for obtaining a strength of a current network signal as well as a frame rate of a currently-played video;
    a calculation module, configured for, based on the strength of the current network signal, switchable resolutions of the video, and a frame rate of the video, calculating switching time intervals of the switchable resolutions; and
    a first switching module, configured for switching the resolution of the video by selecting an optimal switching time interval and the corresponding switchable resolution, and storing the optimal switching time interval and the corresponding switchable resolution in a time interval table which carries the strength of the network signal at each calculation of the switching time intervals.

10. The system according to claim 9, further comprising:

    a second switching module, configured for, when it is detected that the number of video data packet in a video cache region is less than a first threshold value, switching the resolution of the video to a minimum resolution of the video and playing the video at the minimum resolution.

11. The system according to claim 9, wherein when the time interval table carries data at a previous calculation of the switching time interval, the data comprises a strength of a network signal at the previous calculation of the switching time interval; and
    the first switching module comprises:

    a comparison unit, configured for comparing the strength of the current network signal with the strength of the network signal at the previous calculation of the switching time interval, and calling a first selecting unit if the strength of the current network signal is predetermined times greater than the strength of the network signal at the previous calculation of the switching time interval, otherwise calling a second selecting unit;
    the first selecting unit, configured for selecting the next higher resolution of the one at the previous calculation of the switching time interval as the current resolution of the video; and
    the second selecting unit, configured for selecting the switchable resolution corresponding to the previous calculation of the switching time interval as the current resolution of the video.

12. The system according to claim 9, wherein when the time interval table does not contain data at a previous calculation of the switching time interval, the first switching module is configured for switching the resolution of the video by selecting a minimum switching time interval and the corresponding switchable resolution, and storing the minimum switching time interval and the corresponding switchable resolution in the time interval table.

13. The system according to claim 9, wherein the calculation module calculates the switching time intervals of the switchable resolutions according to the following formula:

$$H = (P*F)/(K*128*1024);$$

    wherein H is the switching time interval, P is the switchable resolution, F is the frame rate, and K is the strength of the current network signal.

14. The system according to claim 9, further comprising:

    a second obtaining module, configured for obtaining a physical resolution of a screen; and
    a selecting module, configured for selecting the resolution in the switchable resolutions less than or equal to the physical resolution, selecting the resolution as the switchable resolution turning to step S 1 to calculate the switching time interval of the selected resolution.

15. The system according to claim 13, wherein the second obtaining module comprises:

    a physical detecting unit, configured for respectively detecting the number of three primary colors of a screen in a horizontal direction and in a vertical direction; and
    a calculation unit, configured for calculating a resolution X of the screen in the horizontal direction according to the detected number of the three primary colors of the screen in the horizontal direction, calculating a resolution Y of the screen in the vertical direction according to the detected number of the three primary colors of the screen in the vertical direction, and the physical resolution of the screen being X*Y.

**16.** A system according to claim 9, further comprising:

a video detecting module configured for detecting a playback duration of the video; and
a playing module configured for, when the playback duration of the video is less than a second predetermined threshold value, keeping playing the video at the current resolution.

**17.** A television, comprising a system for switching video playback resolution as claimed claim 9.

| obtaining a strength of a current network signal as well as a frame rate of a currently-played video | S1 |

| based on the strength of the current network signal, switchable resolutions of the currently-played video, and the frame rate of the currently-played video, calculating switching time intervals of the switchable resolutions | S2 |

| based on the strength of the current network signal, switching the resolution of the video by selecting the optimal switching time interval and the switchable resolution corresponding to the optimal switching time interval, and storing the optimal switching time interval and the corresponding switchable resolution in the time interval table which carries the strength of the network signal at each calculation of the switching time intervals | S3 |

FIG. 1

comparing the strength
of the current network signal with the strength of
the network signal corresponding to the previous calculation of
the switching time interval, if the strength of the current network
signal is predetermined times greater than the strength of the
network signal corresponding to the previous calculation
of the switching time interval

S31

S32

selecting the next higher resolution
of the switchable resolution
corresponding to the previous
calculation of the switching time
interval as the current video
playback resolution

S33

selecting the switchable
resolution corresponding to the
previous calculation of the
switching time interval as the
current video playback
resolution

FIG. 2

switching the resolution of the currently-played video to the minimum resolution and playing the video at the minimum resolution when detecting that the number of video data packet in a video cache region is less than a first threshold value — S0

obtaining a strength of a current network signal as well as a frame rate of the currently-played video — S1

based on the strength of the current network signal, switchable resolutions of the currently-played video, and the frame rate of the currently-played video, calculating switching time intervals of the switchable resolutions — S2

based on the strength of the current network signal, switching the resolution of the video by selecting the optimal switching time interval and the switchable resolution corresponding to the optimal switching time interval, and storing the optimal switching time interval and the corresponding switchable resolution in the time interval table which carries the strength of the network signal at each calculation of the switching time intervals — S3

FIG. 3

```
┌─────────────────────────────────────────────────┐
│                                                 │ ⟋— A1
│     obtaining a physical resolution of a screen  │
│                                                 │
└─────────────────────────────────────────────────┘
                         │
                         ▼
┌─────────────────────────────────────────────────┐
│   selecting the resolution in the switchable resolutions │
│   which is less than or equal to the physical resolution, │ ⟋— A2
│   selecting the resolution as the switchable resolution, │
│   turning to step S1 to calculate the switching time interval │
│              of the selected resolution          │
└─────────────────────────────────────────────────┘
```

FIG. 4

```
┌─────────────────────────────────────────────────┐
│   respectively detecting the number of three primary colors of │ ⟋— A101
│   the screen of the television in a horizontal direction and in a │
│                  vertical direction              │
└─────────────────────────────────────────────────┘
                         │
                         ▼
┌─────────────────────────────────────────────────┐
│   calculating a resolution X of the screen of the television in │
│   the horizontal direction according to the detected number of │
│   the three primary colors of the screen of the television in the │
│   horizontal direction, calculating a resolution Y of the screen │ ⟋— A102
│    of the television in the vertical direction according to the  │
│   detected number of the three primary colors of the screen of │
│    the television in the vertical direction, and the physical   │
│      resolution of the screen of the television being X*Y       │
└─────────────────────────────────────────────────┘
```

FIG. 5

detecting a playback duration of the currently-played video — B1

when the playback duration of the video is less than a second predetermined threshold value, keeping playing the video at the current resolution — B2

FIG. 6

System for switching video playback resolution

First obtaining module — 10

Calculation module — 20

First switching module — 30

FIG. 7

30

First switching module

Comparison unit — 301

First selecting unit — 302

Second selecting unit — 303

FIG. 8

System for switching video playback resolution

First obtaining module — 10

Calculation module — 20

First switching module — 30

Second switching module — 40

FIG. 9

System for switching video playback
resolution

First obtaining module — 10

Calculation module — 20

First switching module — 30

Second switching module — 40

Second obtaining module — 50

Selecting module — 60

Video detecting module — 70

Playing module — 80

FIG. 10

```
                          ┌──────────────────────────────┐
                          │                         ┌ 50  │
                          │   Second obtaining module    │
                          │                              │
                          │  ┌────────────────────┐      │── 501
                          │  │ Physical detecting │      │
                          │  │       unit         │      │
                          │  └────────────────────┘      │
                          │                              │── 502
                          │  ┌────────────────────┐      │
                          │  │  Calculation unit  │      │
                          │  └────────────────────┘      │
                          │                              │
                          └──────────────────────────────┘
```

Second obtaining module — 50

Physical detecting unit — 501

Calculation unit — 502

FIG. 11

# INTERNATIONAL SEARCH REPORT

| | |
|---|---|
| International application No. |
| PCT/CN2014/093795 |

**A. CLASSIFICATION OF SUBJECT MATTER**

H04N 21/442 (2011.01) i

According to International Patent Classification (IPC) or to both national classification and IPC

**B. FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNTXT, CNABS, CNKI, VEN: video, program, image, resolution, definition, frame rate, code rate, switch, transform, convert, change, modify, network speed, network intensity, network situation, network signal, network, bandwidth

**C. DOCUMENTS CONSIDERED TO BE RELEVANT**

| Category* | Citation of document, with indication, where appropriate, of the relevant passages | Relevant to claim No. |
|---|---|---|
| A | TW 201233176 A (TENCENT TECHNOLOGY SHENZHEN CO., LTD.) 01 August 2012 (01.08.2012) the whole document | 1-17 |
| A | CN 103002272 A (SHANGHAI SYNACAST MEDIA TECH. CO., LTD.) 27 March 2013 (27.03.2013) the whole document | 1-17 |
| A | CN 103945245 A (SHANGHAI JIAOTONG UNIVERSITY) 23 July 2014 (23.07.2014) the whole document | 1-17 |

☐ Further documents are listed in the continuation of Box C.　　☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 29 April 2015 | 26 May 2015 |

| Name and mailing address of the ISA | Authorized officer |
|---|---|
| State Intellectual Property Office of the P. R. China | |
| No. 6, Xitucheng Road, Jimenqiao | ZHANG, Zhihua |
| Haidian District, Beijing 100088, China | |
| Facsimile No. (86-10) 62019451 | Telephone No. (86-10) 62089470 |

Form PCT/ISA/210 (second sheet) (July 2009)

## INTERNATIONAL SEARCH REPORT
Information on patent family members

| | International application No. |
|---|---|
| | PCT/CN2014/093795 |

| Patent Documents referred in the Report | Publication Date | Patent Family | Publication Date |
|---|---|---|---|
| TW 201233176 A | 01 August 2012 | None | |
| CN 103002272 A | 27 March 2013 | None | |
| CN 103945245 A | 23 July 2014 | None | |

Form PCT/ISA /210 (patent family annex) (July 2009)